# EUROPÄISCHE PATENTSCHRIFT

(11) **EP 0 916 077 B1**
(45) Veröffentlichungstag und Bekanntmachung des Hinweises auf die Patenterteilung: **04.08.2004**
(21) Anmeldenummer: 98916781.2
(22) Anmeldetag: 11.05.1998
(51) Int. Cl.: G01G 21/24, G01G 3/12

(54) **MONOLITHISCHER KRAFTSENSOR**
MONOLITHIC FORCE SENSOR
CAPTEUR DE FORCE MONOLITHIQUE

(30) Priorität: 28.05.1997 CH 126197
(43) Veröffentlichungstag der Anmeldung: 19.05.1999
(73) Patentinhaber: K-TRON TECHNOLOGIES, INC., Wilmington, DE 19801 (US)
(72) Erfinder: STÖCKLI, Roland, CH-5702 Niederlenz (CH); SANER, Kaspar, CH-8600 Dübendorf (CH)
(74) Vertreter: Salgo, Reinhold Caspar, Dr.
(86) Internationale Anmeldenummer: PCT/CH1998/000191
(87) Internationale Veröffentlichungsnummer: WO 1998/037387

(56) Entgegenhaltungen:
- EP-A- 0 071 652
- EP-A- 0 248 226

## Beschreibung

Die vorliegende Erfindung bezieht sich auf Kraftsensoren mit interner Parallelführung und einem Messwandler, der aus der zu messenden Kraft, oder einer durch Untersetzung aus ihr hervorgehenden, ein digitales elektrisches Signal erzeugt. Solche Kraftsensoren sind einige bekannt, so z.B. aus EP 0 325 619 (D1) und EP 0 544 858 (D2). Ferner sind Saiten-Messwandler bekannt, beispielsweise aus EP 0 540 474 (D3).

Die aus D1 und D2 bekannten Kraftsensoren eignen sich beide als flächenbelastbare Messvorrichtungen, da interne Parallelführungen vorhanden sind. Eine elastische Kraftuntersetzung ist in beiden Fällen Bestandteil des Kraft-Sensors. Hingegen sind in beiden Fällen die Messwandler als gesonderte Elemente mit teilweise aufwendigen und empfindlichen Kraftübertragungsorganen in die Kraft-Sensoren eingebaut. Feuchtigkeitsund gasdichte Ausführung der in D1 und D2 verwendeten Messwandler werfen hingegen technische Probleme auf, da in aller Regel solche Ausführungen verhältnismässig gross bauen und weitere Kraftuntersetzungen mit sich bringen. Ferner ist aus EP 319 176 eine dichte Ausführung eines Taumelzapfens mit integrierter Mess-Elektronik bekannt.

Allerdings ist ein Taumelzapfen grundsätzlich für Punktlasten gebaut und nicht ohne weiteres für Flächenlasten umzukonstruieren.

Die Aufgabe, die mit der vorliegenden Erfindung gelöst werden soll, besteht in der Schaffung eines niedrig bauenden flächenbelastbaren Kraftsensors mit integrierter Parallelführung und Kraftuntersetzung in feuchtigkeits- und gasdichter Ausführung. Die Lösung der gestellten Aufgabe ist wiedergegeben im Patentanspruch 1 hinsichtlich ihrer wesentlichen Merkmale, in den Patentansprüchen 2 bis 17 hinsichtlich weiterer vorteilhafter Ausführungen.

Der Erfindungsgedanke wird anhand der beigefügten Zeichnungen erläutert. Es zeigen
- Fig. 1: einen Längsschnitt durch ein erstes Ausführungsbeispiel eines Kraftsensors,
- Fig. 2: einen ersten Querschnitt AA,
- Fig. 3: einen zweiten Querschnitt BB,
- Fig. 4: einen dritten Querschnitt CC,
- Fig. 5: einen Längsschnitt durch den Lastkörper bei Belastung,
- Fig. 6: einen Längsschnitt durch ein zweites Ausführungsbeispiel eines Kraftsensors,
- Fig. 7: eine erste perspektivische Ansicht des Kraftsensors,
- Fig. 8: eine zweite perspektivische Ansicht des Kraftsensors.

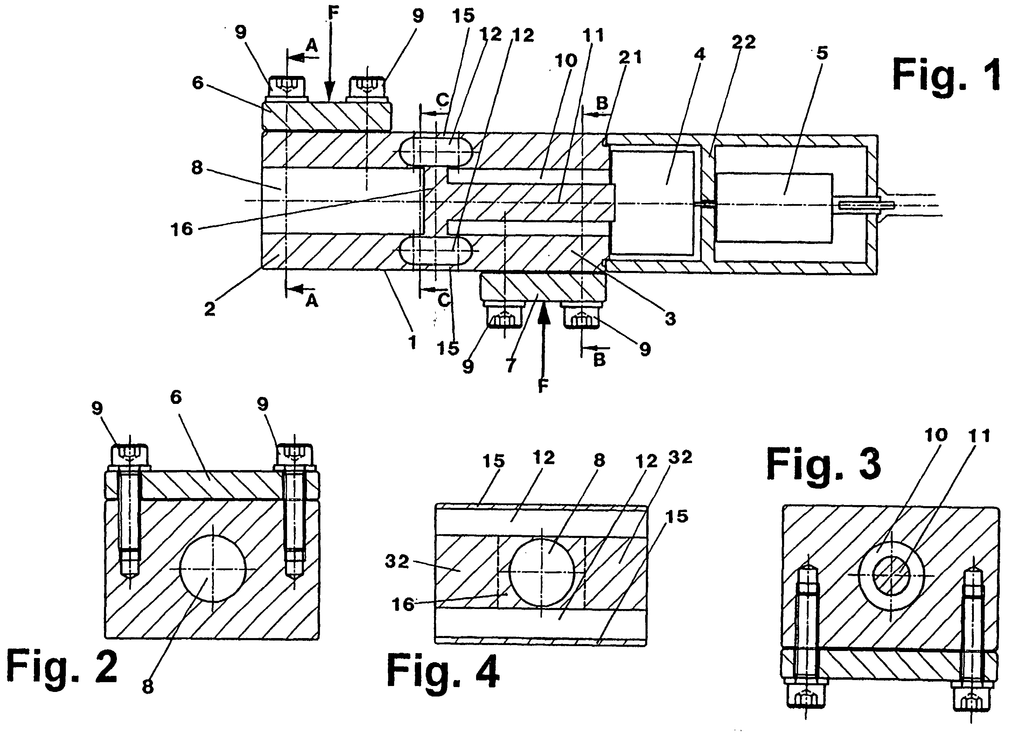

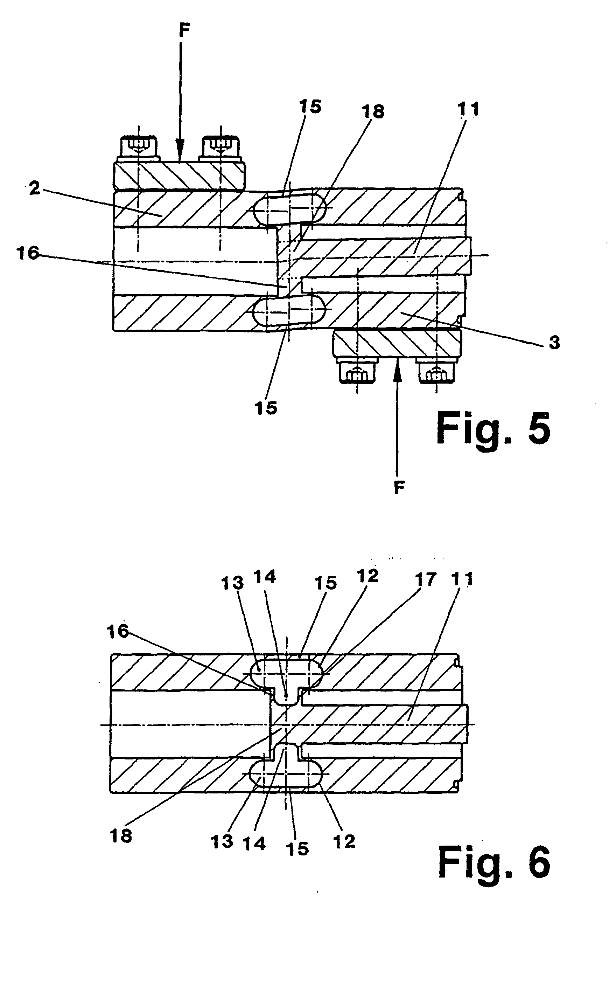

Fig. 1 zeigt ein erstes Ausführungsbeispiel eines erfindungsgemässen Kraftsensors. Er ist aufgebaut aus einem Lastkörper 1, einem Messwandler 4 und zugehöriger Auswertelektronik 5. Der Lastkörper 1 ist in sich gegliedert in einen Lastträger 2 und eine Basis 3; letztere beiden Elemente sind mit einer Platte 6 bzw. 7 versehen, die zur Einleitung der zu messenden Kraft F dienen. Die Orte, an denen die Platten 6, 7 beispielsweise mit Schrauben 9 am Lastkörper 1 befestigt sind, sind insofern nicht entscheidend, als die Platte 6 nach rechts über die Basis 3, die Platte 7 nach links unter den Lastträger 2 verschoben werden kann. Die Beanspruchung des Lastkörpers 1 durch die zu messende Kraft ändert dann die Richtung. Der Lastkörper 1 besteht - wie auch aus Fig. 6 hervorgeht, aus einem Quader. Der Lastträger 2, in Fig. 2 im Schnitt AA dargestellt, weist eine axiale Längsbohrung 8 auf, die stumpf endet. Die Basis 3 weist, wie aus Fig. 3 im Schnitt BB ersichtlich, ebenfalls eine Längsbohrung auf, die als zur Längsbohrung 8 koaxiale Hohlbohrung 10 ausgeführt ist. Die Hohlbohrung 10 lässt im Innern ein stabförmiges Element, einen Hebel 11, stehen und endet ebenfalls stumpf.

Die Längen der Bohrungen 8 und 10 sind zusammen kürzer als die gesamte Länge des Lastkörpers 1. Dies lässt Raum für zwei quer zur Längsachse des Lastkörpers 1 angebrachte, zwischen Lastträger 2 und Basis 3 liegende identische Ausfräsungen 12, die hier beispielsweise im wesentlichen rechteckig ausgeführt sind. Zwischen den Ausfräsungen 12 und den Aussenflächen des Lastkörpers 1 bleibt je ein flaches Element stehen, das als Biegefeder 15 bezeichnet ist, aussen begrenzt durch die Oberfläche des Lastkörpers 1, innen begrenzt durch die Ausfräsungen 12. Begrenzt durch die stumpfen Enden der Längsbohrung 8 und der Hohlbohrung 10 und die Ausfräsungen 12, entsteht eine Membran 16, die verbunden ist mit dem Hebel 11. Damit dient die Membran 16 als elastisches Gelenk für den Hebel 11.

Senkrecht zu den Ausfräsungen 12 verlaufen, diese verbindend, zwei Ausfräsungen 32, deren Tiefe senkrecht zur Zeichenebene im wesentlichen jener der Ausfräsungen 12 entspricht (siehe Fig. 4).

In Fig. 4, die einen Querschnitt CC durch den Lastkörper 1 gemäss Fig. 1 darstellt, ist die Membran 16 ersichtlich.

Werden Basis 3 und Lastträger 2 in den durch die Kraftpfeile F von Fig. 1 gegebenen Richtungen belastet, so verbiegen sich die Biegefedern 15 S-förmig, und der Hebel 11 weicht nach oben aus, wie in Fig. 5 stark überhöht gezeigt. Tatsächlich sind die effektiven Deformationen viel kleiner, ja eigentlich virtueller Natur, da die meisten Messwandler, die hier in Frage kommen, praktisch weglos arbeiten. In Fig. 5 ist zudem der Messwandler 4 und die zugehörige Elektronik 5 weggelassen. Der Hebel 11 untersetzt also die auf den Lastträger 2 wirkende Kraft, bzw. die an der Membran 16 angreifende und auf ein kurzes Stück 18 des Hebels 11, das zwischen den Begrenzungsflächen der Membran 16 liegt, übertragene, gemäss den durch die Länge des Stückes 18 und jene des Hebels 11 gegebene Drehmoment-Verhältnissen. Soll die elastische Untersetzung vergrössert werden, so kann einerseits die Membran 16 dünner gemacht oder anderseits können die Biegefedern 15 stärker ausgeführt werden; selbstverständlich sind beide Massnahmen kumulierbar.

Fig. 6 ist ein Längsschnitt durch einen zweiten erfindungsgemässen Lastkörper 1. Hier sind die Ausfräsungen 12 gegliedert in einen die Biegefeder 15 definierenden peripheren Teil 13 und einen das kurze Stück 18 des Hebels 11 definierenden zentralen Teil 14. Dabei entstehen im Wesentlichen zwei Membranen 16, 17, die durch das kurze Stück 18 des Hebels 11 getrennt sind. Weitere Ausführungsformen sind möglich ohne den Erfindungsgedanken zu verlassen, sofern durch die Ausfräsungen 12 die Biegefedern 15 und das zwischen den Membranen 16, 17 liegende Stück 18 des Hebels 11 definiert werden, und die Definition der Membranen 16, 17 erfolgt durch die Längsbohrung 8 und die zu ihr koaxiale Hohlbohrung 10, die gleichzeitig den Hebel 11 definiert. Unter den Bezeichnungen "Bohrung 8", "Hohlbohrung 10", "Ausfräsung 12" sind nicht einschränkend nur die Tätigkeiten Bohren und Fräsen zu verstehen. Selbstverständlich können auch andere spanende Techniken angewendet werden. Weiter kann die Formgebung auch durch bekannte andere Verfahren, beispielsweise Senkerodieren, Fliesspressen oder Giessen vorgenommen werden, allenfalls gefolgt von einer spanenden Feinbearbeitung.

Die elastische Verformung des Lastkörpers 1 gemäss Fig 6 erfolgt in analoger Weise zu der in Fig. 5 gezeigten.

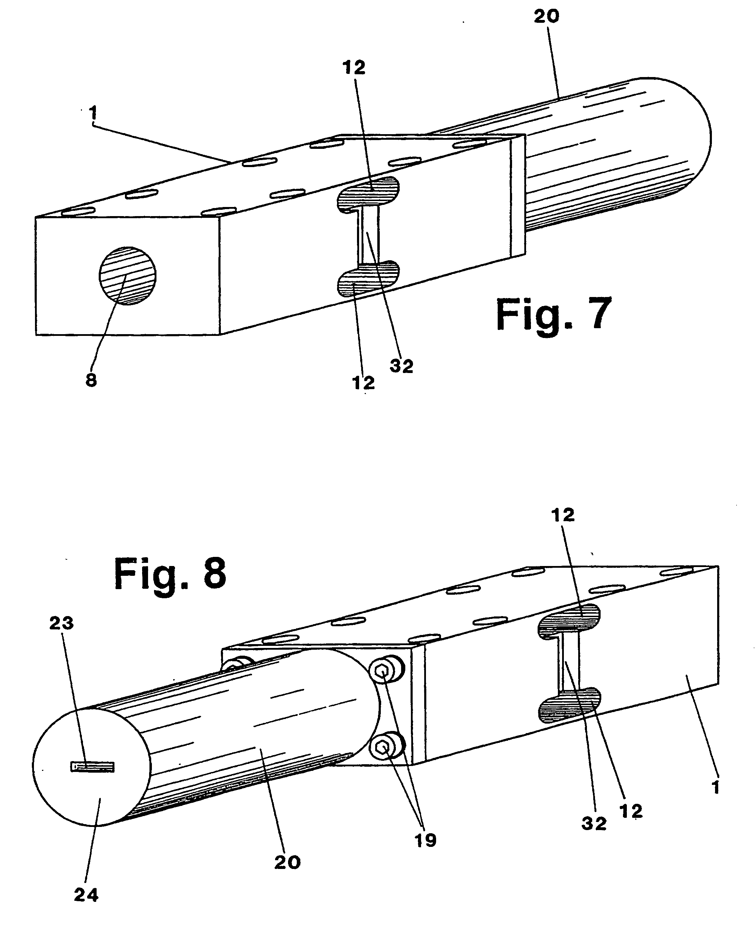

Fig. 7 und 8 zeigen perspektivische Ansichten des quaderförmigen Lastkörpers 1. Beispielsweise mittels Schrauben 19 ist ein Gehäuse 20 am Lastkörper 1 befestigt. Das Gehäuse 20 ist gegen den Lastkörper 1 beispielsweise mittels eines - in Fig. 1 dargestellten - O-Ringes 21 abgedichtet. Das Gehäuse 20 weist ferner in seinem Inneren eine dichte Wand 22 auf, so dass der Messwandler 4 wasser- und gasdicht gekapselt ist. Seine so gestaltete Umhüllung ist also begrenzt durch die Wand 22, den lastkörperseitigen Teil des Gehäuses 20, die Wandung der Hohlbohrung 10 und die Membran 17. Die Auswerteelektronik 5 befindet sich im lastkörperfernen Teil des Gehäuses 20, der für sich dicht ausgeführt ist.

In Fig. 7 und in der perspektivischen Darstellung von Fig. 8, die den Kraftsensor von der anderen Seite zeigt als Fig. 7, ist das Gehäuse 20 zylindrisch ausgeführt. Im Sinne der Erfindung ist selbstverständlich auch jede andere Form des Gehäuses, das den Messwandler 4 und die Auswerteelektronik 5 aufnimmt und im Inneren die dichte Wand 22 aufweist. Der beispielsweise einen Stecker 23 enthaltende Deckel des Gehäuses 20 - hier mit der Ziffer 24 bezeichnet - kann ebenfalls mit (hier nicht dargestellten) Schrauben befestigt und mit einem O-Ring gedichtet sein.

Als Messwandler 4 kommen, bei entsprechender Gestaltung, alle heute bekannten und praktisch weglosen Typen in Frage, wie beispielsweise Schwingsaiten -, Dehnmessstreifen-, piezoelektrische, kapazitive und refraktometrische Messwandler.

Der erfindungsgemässe monolithische Kraftsensor findet seinen Einsatz überall dort, wo Flächenlasten ermittelt werden, oder die Messaufgabe auf die Ermittlung einer Flächenlast reduziert werden kann, und die Platten 6, 7 dadurch, ausser mit den in Fig. 1 gezeigten Kräften, auch mit Drehmomenten beaufschlagt sind. Beispiele hiefür sind
- Plattformwaagen
- Bandwaagen
- Hängebahnwaagen

Ferner lässt sich die Anwendung auch leicht auf die Ermittlung von Punktlasten erweitern, indem beispielsweise die Platte 6 mit einem Krafteinleitungselement mit beispielsweise kugelteilförmiger Oberfläche ergänzt oder durch ein solches ersetzt wird. Werden beide Platten 6, 7 mit kugelteiligen Oberflächen ergänzt, dergestalt, dass die Kugelteile koaxial angeordnet sind, im Wesentlichen den gleichen Radius aufweisen, welcher grösser ist als die Hälfte des Abstandes der äussersten Punkte der Kugelteile, so erhält man einen eingangs genannten Taumelzapfen.

Vorteile des erfindungsgemässen Kraftsensors liegen in der niedrigen Bauhöhe, der gas- und wasserdichten Ausführung des Messteiles, der einfachen Herstellung und der nicht a priori auf einen bestimmten Messwandler festgelegten Bauweise.

## Patentansprüche

1. Kraftsensor mit interner Parallelführung und elastischer Untersetzung und einem Messwandler (4), welcher aus der an ihn übertragenen untersetzten Kraft ein digitales elektrisches, den ursprünglichen zu messenden Kraftwert darstellendes Signal erzeugt, **dadurch gekennzeichnet, dass**
- er besteht aus einem im Wesentlichen quaderförmigen Lastkörper (1) welcher durch eine von der einen Stirnfläche her koaxial zu seiner Längsachse verlaufende Längsbohrung (8), eine dazu koaxiale und von der anderen Stirnfläche her verlaufende Hohlbohrung (10) und je zwei senkrecht zur Längsachse angeordnete Ausfräsungen (12, 32) gegliedert ist in zwei durch die Ausfräsungen (12,32) erzeugten Biegefedern (15), einen durch die Hohlbohrung (10) erzeugten Hebel (11) und mindestens eine durch die stumpfer Ender der Längsbohrung (8) und der Hohlbohrung (10) erzeugte Membran (16),
- der Lastkörper (1) an den Aussenflächen, die auch die Biegefedern (15) begrenzen, Mittel aufweist zur Einleitung der senkrecht zu seiner Längsachse angreifenden zu messenden Kraft,
- der Lastkörper (1) auf der Seite des Hebels (11) und von diesem beaufschlagt, dicht mit dem Messwandler (4) verbunden ist, der in einem dichten Gehäuse (20) untergebracht ist,
- das Gehäuse (20) ferner, durch eine dichte Wand (22) vom Messwandler (4) getrennt, eine die Signale des Messwandlers (4) in die den Kraftwert darstellenden digitalen elektrischen Signale verarbeitende Auswerteelektronik (5) enthält, dergestalt dass der Messwandler (4) durch eine weitere Membran (17), die Wandung der Hohlbohrung (10) und das Gehäuse (20) dicht von der Aussenwelt und der Auswerteelektronik (5) abgeschlossen ist.

2. Kraftsensor nach Patentanspruch 1, **dadurch gekennzeichnet, dass** der Lastkörper (1) aus einem Stück gefertigt ist.

3. Kraftsensor nach Patentanspruch 2, **dadurch gekennzeichnet, dass**
- die Tiefen der Bohrungen (8, 10) zusammen kürzer sind, als die gesamte Länge des Lastkörpers (1),
- die quer zu seiner Längsachse und im wesentlichen symmetrisch dazu angebrachten durchgehenden ersten Ausfräsungen (12) so angeordnet sind, dass je zwischen einer ersten Ausfräsung (12) und der Aussenfläche des Lastkörpers (1) eine flache Biegefeder (15) stehen bleibt,
- die beiden ersten Ausfräsungen (12) entlang der zu den Biegefedern (15) senkrechten Aussenflächen verbunden sind durch zwei weitere Ausfräsungen (32), deren Abstand von der Längsachse im wesentlichen jenem der ersten Ausfräsungen (12) entspricht,
- die Dicke der Membran (16) gegeben ist durch den Abstand der Stirnflächen der Bohrungen (8, 10).

4. Kraftsensor nach Patentanspruch 3, **dadurch gekennzeichnet, dass** die ersten Ausfräsungen (12) im wesentlichen rechteckigen Querschnitt aufweisen und die Erstreckung in Längsrichtung des Lastkörpers (1) mindestens so gross ist, wie jene der zweiten, dazu senkrecht verlaufenden zweiten Ausfräsungen (32).

5. Kraftsensor nach Patentanspruch 1, **dadurch gekennzeichnet, dass** die ersten Ausfräsungen (12) gegliedert sind in einen langgestreckten peripheren Teil (13) und einen gegen die Längsachse des Lastkörpers (1) hin liegenden zentralen Teil (14), wobei die Biegefedern (15) einerseits von den peripheren Teilen (13) und anderseits von den Aussenflächen des Lastkörpers (1) definiert sind, und die Breite der zu den ersten Ausfräsungen (12) senkrecht verlaufenden Ausfräsungen (32) der Breite des zentralen Teiles (14) der ersten Ausfräsungen entspricht, der Kraftsensor somit zwei Membranen (16, 17) aufweist, welche durch ein kurzes Stück (18) des Hebels (11) verbunden sind.

6. Kraftsensor nach den Patentansprüchen 3 bis 5, **dadurch gekennzeichnet, dass** die Bohrungen (8, 10) und die Ausfräsungen (12, 32) durch spanendes Bearbeiten erzeugt sind.

7. Kraftsensor nach den Patentansprüchen 3 bis 5, **dadurch gekennzeichnet, dass** die Bohrungen (8, 10) und die Ausfräsungen (12, 32) genannten Formelemente durch nicht spanende Formgebetechnik erzeugt sind.

8. Kraftsensor nach Patentanspruch 7, **dadurch gekennzeichnet, dass** der Lastkörper (1) mit seinen Bohrungen (8, 10) und Ausfräsungen (12, 32) genannten Formelementen durch Funkenerosion erzeugt ist.

9. Kraftsensor nach Patentanspruch 7, **dadurch gekennzeichnet, dass** der Lastkörper (1) mit seinen Bohrungen (8, 10) und Ausfräsungen (12, 32) genannten Formelementen durch Fliesspressen erzeugt ist.

10. Kraftsensor nach Patentanspruch 7, **dadurch gekennzeichnet, dass** der Lastkörper (1) mit seinen Bohrungen (8, 10) und Ausfräsungen (12, 32) genannten Formelementen durch Giessen erzeugt ist.

11. Kraftsensor nach Patentansprüchen 9 und 10, **dadurch gekennzeichnet, dass** der Lastträger nach der Formgebung spanend überarbeitet ist.

12. Kraftsensor nach Patentanspruch 1, **dadurch gekennzeichnet, dass** die Mittel, um das Gehäuse (20) dicht mit dem Lastkörper (1) zu verbinden, aus einem O-Ring bestehen.

13. Kraftsensor nach Patentanspruch 1, **dadurch gekennzeichnet, dass**
- die Mittel, um die zu messende Kraft auf den Lastkörper (1) einzuleiten, in zwei Platten (6, 7) bestehen, von denen die eine Platte (6) an der einen Aussenwand des Lastträgers (1) anliegt und dort befestigt ist, wo im Innern des Lastkörpers die Längsbohrung (8) verläuft, die andere Platte (7) auf der gegenüberliegenden Aussenwand des Lastkörpers (1) anliegt und dort befestigt ist, wo im Innern des Lastkörpers (1) die Hohlbohrung (10) verläuft,
- die Platten (6, 7) zur Aufnahme von drehmomenterzeugenden Flächenlasten eingerichtet sind.

14. Kraftsensor nach Patentanspruch 1, **dadurch gekennzeichnet, dass** die Mittel, um die zu messende Kraft auf den Lastkörper einzuleiten, bestehen aus
- einer Platte (6), die an der einen Aussenwand des Lastträgers (1) anliegt und dort befestigt ist, wo im Innern des Lastkörpers die Längsbohrung (8) verläuft,
- einem Kugelabschnitt, welcher auf der gegenüberliegenden Aussenwand des Lastkörpers (1) anliegt und dort befestigt ist, wo im Innern des Lastkörpers (1) die Hohlbohrung (10) verläuft

15. Kraftsensor nach Patentanspruch 14, **dadurch gekennzeichnet, dass** der Kugelabschnitt konvex ist.

16. Kraftsensor nach Patentanspruch 14, **dadurch gekennzeichnet, dass** der Kugelabschnitt konkav ist.

17. Kraftsensor nach Patentanspruch 13, **dadurch gekennzeichnet, dass** die Platten (6, 7) je einen konvexen Kugelabschnitt tragen, die koaxial sind zueinander, die Krümmungsradien der beiden Kugelabschnitte im Wesentlichen gleich, jedoch grösser sind, als die Hälfte des Abstandes der äussersten Punkte der Kugelabschnitte.

## Claims

1. A force sensor with internal parallel motion and elastic reduction and a measurement transducer (4), which, from the reduced force transmitted to it, generates a digital electrical signal representing the original force value to be measured, **characterised in that**,
- it comprises an essentially cuboid load body (1) which is divided into two flexing springs (15) by a longitudinal bore hole (8) running from one end surface coaxial with its longitudinal axis and a hollow bore hole (10) running from the other end surface and two notches (12, 32) arranged perpendicular to the longitudinal axis and generated by the said two notches (12, 32), a lever (11) created by the hollow bore hole (10) and at least one membrane (16) generated jointly by the blunt ends of the longitudinal bore hole (8) and the hollow bore hole (10),
- the load body (1) has means on the outer surfaces, which also border the flexing springs (15), for the introduction of the force to be measured engaging perpendicularly to its longitudinal axis,
- the load body (1) is joined firmly to the measurement transducer (4), which is housed in a sealed casing, on the side of the lever (11) and is actuated by it,
- the casing (20) also includes evaluation electronics (5), separated from the measurement transducer (4) by a sealed wall (22), which process the signals from the measurement transducer (4) into digital electrical signals representing the force value, in such a manner that the measurement transducer (4) is closed off tightly from the outside world and the evaluation electronics (5) by a further membrane (17), the walls of the hollow bore hole (10) and the casing (20).

2. A force sensor according to Claim 1, **characterised in that** the load body (1) is manufactured in one piece.

3. A force sensor according to Claim 2, **characterised in that**
- the depths of the bore holes (8, 10) together are less than the overall length of the load body (1),
- the first penetrating notches (12) at right angles to its longitudinal axis and essentially symmetrical to it are arranged such that in each case between a first notch (12) and the outer surface of the load body (1) a flat flexing spring (15) remains,
- the two first notches (12) are joined along the outer surfaces perpendicular to the flexing springs (15) by two further notches (32), whose distance from the longitudinal axis essentially corresponds to that of the first notches (12),
- the thickness of the membrane (16) is set by the separation of the bottom ends of the bore holes (8, 10).

4. A force sensor according to Claim 3, **characterised in that** the first notches (12) have an essentially rectangular cross section and the extension in the longitudinal direction of the load body (1) is at least as large as that of the second notches (32) running perpendicular to them.

5. A force sensor according to Claim 1, **characterised in that** the first notches (12) are divided into an extended peripheral section (13) and a central section (14) lying towards the longitudinal axis of the load body (1), whereby the flexing springs (15) are defined on the one side by the peripheral sections (13) and on the other side by the outer surfaces of the load body (1), and the width of the notches (32) running perpendicular to the first notches (12) corresponds to the width of the central section (14) of the first notches (12), the force sensor has thereby two membranes (16, 17), which are joined by a short piece (18) of the lever (11).

6. A force sensor according to Claims 3 to 5, **characterised in that** the bore holes (8, 10) and the notches (12, 32) are created by material cutting processes.

7. A force sensor according to Claims 3 to 5, **characterised in that** the elements of shape called bore holes (8, 10) and notches (12, 32) are created by non-cutting shaping techniques.

8. A force sensor according to Claim 7, **characterised in that** the load body (1) with its elements of shape called bore holes (8, 10) and notches (12, 32) is created by spark erosion.

9. A force sensor according to Claim 7, **characterised in that** the load body (1) with its elements of shape called bore holes (8, 10) and notches (12, 32) is created by flow pressing.

10. A force sensor according to Claim 7, **characterised in that** the load body (1) with its elements of shape called bore holes (8, 10) and notches (12, 32) is created by casting.

11. A force sensor according to Claims 9 and 10, **characterised in that** the load bearer is reworked by machining following shaping.

12. A force sensor according to Claim 1, **characterised in that** the means by which the casing (20) is tightly joined to the load body (1) comprise an O-ring.

13. A force sensor according to Claim 1, **characterised in that**
- the means, whereby the force to be measured is introduced onto the load body (1) comprise two plates (6, 7), of which plate (6) lies against one of the outer walls of the load bearer (1) and is fastened where the longitudinal bore hole (8) runs inside the load body (1), the other plate (7) lies against the opposite outer wall of the load body (1) and is fastened where the hollow bore hole (10) runs inside the load body (1),
- the plates (6, 7) are set up to receive torque generating surface loads.

14. A force sensor according to Claim 1, **characterised in that** the means, whereby the force to be measured is introduced onto the load body comprise
- a plate (6), which lies against one outer wall of the load bearer (1) and is fastened where the longitudinal bore hole (8) runs inside the load body (1),
- a ball segment, which lies against the opposite wall of the load body (1) and is fastened where the hollow bore hole (10) runs inside the load body (1).

15. A force sensor according to Claim 14, **characterised in that** the ball segment is convex.

16. A force sensor according to Claim 14, **characterised in that** the ball segment is concave.

17. A force sensor according to Claim 13, **characterised in that** the plates (6, 7) each carry a convex ball segment, which are coaxial with each other, the radius of curvature of the two ball segments is essentially the same, but however greater than the half of the distance separating the outermost points of the ball segments.

## Revendications

1. Capteur dynamométrique muni d'un guidage parallèle interne, d'une démultiplication élastique et d'un convertisseur de mesure (4) qui, à partir de la force démultipliée qui lui est transmise, produit un signal électrique numérique représentant la valeur initiale de la force à mesurer, **caractérisé en ce que**
- il se compose d'un corps de charge (1) de forme essentiellement parallélépipédique qui est divisé, par un orifice longitudinal (8) s'étendant dans le sens coaxial par rapport à son axe longitudinal à partir d'une surface frontale, un orifice creux (10) coaxial à celui-ci et s'étendant depuis l'autre surface frontale et deux fraisures (12, 32) disposées perpendiculairement par rapport à l'axe longitudinal, en deux ressorts de flexion (15) produits par les fraisures (12, 32), un levier produit par l'orifice creux (10) et au moins une membrane (16) produite par les extrémités tronquées de l'orifice longitudinal (8) et de l'orifice creux (10),
- le corps de charge (1) présente, au niveau des surfaces extérieures qui délimitent également les ressorts de flexion (15), des moyens pour appliquer la force à mesurer qui agit perpendiculairement à son axe longitudinal,
- le corps de charge (1) est relié de manière étanche avec le convertisseur de mesure (4), lequel est logé dans un boîtier étanche (20), du côté du levier (11) et il est sollicité par celui-ci,
- le boîtier (20) contient en plus un circuit électronique d'analyse (5), séparé du convertisseur de mesure (4) par une paroi étanche (22), lequel convertit les signaux du convertisseur de mesure (4) en signaux électriques numériques qui représentent la valeur de la force et qui est configuré de telle manière que le convertisseur de mesure (4) est fermé hermétiquement par rapport au monde extérieur et au circuit électronique de mesure (5) par une membrane supplémentaire (17), la paroi de l'orifice creux (10) et le boîtier (20).

2. Capteur dynamométrique selon la revendication 1, **caractérisé en ce que** le corps de charge (1) est fabriqué d'une seule pièce.

3. Capteur dynamométrique selon la revendication 2, **caractérisé en ce que**
- les profondeurs des orifices (8, 10) sont, ensemble, inférieures à la longueur totale du corps de charge (1),
- les premières fraisures (12) continues, disposées dans le sens transversal par rapport à son axe longitudinal et pour l'essentiel de manière symétrique par rapport à celui-ci, sont arrangées de telle manière qu'il reste un ressort de flexion plat (15) à chaque fois entre une première fraisure (12) et la surface extérieure du corps de charge (1),
- les deux premières fraisures (12) sont reliées le long des surfaces extérieures perpendiculaires aux ressorts de flexion (15) par deux fraisures supplémentaires (32) dont l'écart par rapport à l'axe longitudinal correspond pour l'essentiel à celui des premières fraisures (12),
- l'épaisseur de la membrane (16) est définie par l'écart entre les surfaces frontales des orifices (8, 10).

4. Capteur dynamométrique selon la revendication 3, **caractérisé en ce que** les premières fraisures (12) présentent une section transversale essentiellement rectangulaire et l'étendue dans le sens longitudinal du corps de charge (1) est au moins aussi grande que celle des deuxièmes fraisures (32) qui s'étendent perpendiculairement à celui-ci.

5. Capteur dynamométrique selon la revendication 1, **caractérisé en ce que** les premières fraisures (12) sont divisées en une partie périphérique (13) étendue dans le sens longitudinal et une partie centrale (14) qui se trouve contre l'axe longitudinal du corps de charge (1), les ressorts de flexion (15) étant définis d'un côté par les parties périphériques (13) et de l'autre côté par les surfaces extérieures du corps de charge (1) et la largeur des fraisures (32) qui s'étendent perpendiculairement aux premières fraisures (12) correspondant à la largeur de la partie centrale (14) des premières fraisures, le capteur dynamométrique présentant ainsi deux membranes (16, 17) qui sont reliées par une portion courte (18) du levier (11).

6. Capteur dynamométrique selon les revendications 3 à 5, **caractérisé en ce que** les orifices (8, 10) et les fraisures (12, 32) sont produits par un usinage par enlèvement de copeaux.

7. Capteur dynamométrique selon les revendications 3 à 5, **caractérisé en ce que** les orifices (8, 10) et les fraisures (12, 32) des éléments façonnés mentionnés sont produits par une technique de façonnage sans enlèvement de copeaux.

8. Capteur dynamométrique selon la revendication 7, **caractérisé en ce que** le corps de charge (1) avec ses orifices (8, 10) et ses fraisures (12, 32) des éléments façonnés mentionnés est produit par électroérosion.

9. Capteur dynamométrique selon la revendication 7, **caractérisé en ce que** le corps de charge (1) avec ses orifices (8, 10) et ses fraisures (12, 32) des éléments façonnés mentionnés est produit par extrusion.

10. Capteur dynamométrique selon la revendication 7, **caractérisé en ce que** le corps de charge (1) avec ses orifices (8, 10) et ses fraisures (12, 32) des éléments façonnés mentionnés est produit par moulage.

11. Capteur dynamométrique selon les revendications 9 et 10, **caractérisé en ce que** le support de charge est repris par enlèvement de copeaux après le façonnage.

12. Capteur dynamométrique selon la revendication 1, **caractérisé en ce que** les moyens destinés à assurer une liaison étanche entre le boîtier (20) et le corps de charge (1) sont constitués d'un joint torique.

13. Capteur dynamométrique selon la revendication 1, **caractérisé en ce que**
- les moyens destinés à appliquer la force à mesurer sur le corps de charge (1) se composent de deux plaques (6, 7) dont l'une des plaques (6) repose sur une paroi extérieure du support de charge (1) et elle est fixée à l'endroit où l'orifice longitudinal (8) s'étend à l'intérieur du corps de charge, l'autre plaque (7) repose sur la paroi extérieure opposée du corps de charge (1) et elle est fixée à l'endroit où l'orifice creux (10) s'étend à l'intérieur du corps de charge (1),
- les plaques (6, 7) sont disposées de manière à absorber les charges de surface produisant le couple.

14. Capteur dynamométrique selon la revendication 1, **caractérisé en ce que** les moyens destinés à appliquer la force à mesurer sur le corps de charge se composent
- d'une plaque (6) qui repose sur l'une des parois extérieures du support de charge (1) et elle est fixée à l'endroit où l'orifice longitudinal (8) s'étend à l'intérieur du corps de charge,
- d'une section sphérique qui repose sur la paroi extérieure opposée du corps de charge (1) et elle est fixée à l'endroit où l'orifice creux (10) s'étend à l'intérieur du corps de charge (1).

15. Capteur dynamométrique selon la revendication 14, **caractérisé en ce que** la section sphérique est convexe.

16. Capteur dynamométrique selon la revendication 14, **caractérisé en ce que** la section sphérique est concave.

17. Capteur dynamométrique selon la revendication 13, **caractérisé en ce que** les plaques (6, 7) comportent chacune une section sphérique convexe coaxiale par rapport à l'autre, les rayons de courbure des deux sections sphériques étant pour l'essentiel égaux mais cependant supérieurs à la moitié de l'écart entre les points les plus à l'extérieur des sections sphériques.
